# DEMANDE DE BREVET EUROPEEN

(11) **EP 3 099 093 A1**
(43) Date de publication de la demande: **30.11.2016**
(21) Numéro de dépôt: 16170651.0
(22) Date de dépôt: 20.05.2016
(51) Int. Cl.: H04W 12/04, H04W 4/00, H04W 12/06

(54) **PROCÉDÉ DE CONTRÔLE D'ACCÈS À UN SERVICE**

(30) Priorité: 28.05.2015 FR 1554828
(71) Demandeur: Orange, 75015 Paris (FR)
(72) Inventeur: PERRUFEL, Micheline, 35740 Pace (FR); DUSSAUME, Philippe, 35460 Tremblay (FR); BOUCHET, Olivier, 35700 Rennes (FR)

(57) **Abrégé**

L'invention concerne un procédé de contrôle d'accès à un service en ligne, l'accès au service étant sollicité, via un réseau de communication, par un terminal adapté pour recevoir des données diffusées par un dispositif de transmission de données par modulation de lumière visible produisant un faisceau lumineux, le procédé étant caractérisé en ce qu'il comporte des étapes de génération d'un jeton d'accès au service, d'émission d'une commande de diffusion du jeton d'accès au service par le dispositif de transmission de données par modulation de lumière visible, et lorsque le terminal est à portée du faisceau lumineux, de réception, via le réseau de communication, d'une requête d'accès au service comprenant un jeton d'accès au service en provenance du terminal, de contrôle de la validité du jeton d'accès, et d'autorisation d'accès lorsque le jeton est valide. Corrélativement, l'invention concerne un procédé d'accès à un service et des dispositifs, serveurs et terminaux mettant en oeuvre ces procédés.

## Description

### DOMAINE TECHNIQUE

La présente invention se rapporte au domaine des télécommunications et plus particulièrement à un procédé d'autorisation d'accès à un réseau à partir d'un point d'accès sans fil public.

### ART ANTÉRIEUR

La démocratisation des terminaux mobiles de type smartphone ou tablette incite aujourd'hui les établissements accueillant du public à offrir un accès Internet gratuit à leurs hôtes. Par exemple, il est courant qu'un bar, un restaurant, un hôtel ou une boutique offre un accès internet à ses clients par l'intermédiaire d'un point d'accès sans fil. Ces points d'accès, communément appelés « hotspot », correspondent le plus souvent à un point d'accès Wi-Fi pouvant être ou non protégé par une clef de sécurité. Lorsqu'il est sécurisé, les utilisateurs doivent saisir une clef de sécurité sur leur terminal pour accéder au service, comme par exemple une clef WEP (Wired Equivalent Privacy) ou WPA (Wi-Fi Protected Access). Le fait de devoir obtenir puis saisir cette clef de sécurité étant souvent un frein à l'utilisation du service, de plus en plus de hotspots sont configurés sans clef de sécurité de façon à ce que les clients puissent immédiatement bénéficier de l'accès Internet.

Toutefois, il arrive fréquemment que l'accès Internet soit réservé aux seuls clients de l'établissement. Pour cela, les établissements peuvent mettre en place un portail web au travers duquel les utilisateurs sont invités à s'identifier pour accéder à Internet, en saisissant un code par exemple. Un tel code peut être communiqué au client par l'intermédiaire d'un ticket de caisse par exemple ou par voie orale. Pour simplifier l'identification et automatiser la saisie du code, il est parfois proposé à l'utilisateur de scanner un code barre en deux dimensions.

De tels systèmes restent contraignant pour l'utilisateur car ils nécessitent des manipulations. D'autre part, ces systèmes ne peuvent garantir que seuls les clients de l'établissement pourront utiliser le hotspot. En effet, un riverain peut facilement obtenir un code d'accès lui permettant d'accéder à Internet au travers du hotspot si la portée du point d'accès sans fil l'y autorise.

Il existe donc un besoin pour une solution technique permettant de limiter l'accès à un réseau sans fil aux seuls utilisateurs présent dans l'établissement offrant le service, sans qu'il soit nécessaire de saisir un code.

### RÉSUMÉ DE L'INVENTION

À cet effet, l'invention concerne un procédé de contrôle d'accès à un service en ligne, l'accès au service étant sollicité, via un réseau de communication, par un terminal adapté pour recevoir des données diffusées par un dispositif de transmission de données par modulation de lumière visible produisant un faisceau lumineux, le procédé étant caractérisé en ce qu'il comporte les étapes suivantes mises en oeuvre par un serveur:
- Génération d'un jeton d'accès au service,
- Émission d'une commande de diffusion du jeton d'accès au service par le dispositif de transmission de données par modulation de lumière visible, et
Lorsque le terminal est à portée du faisceau lumineux :
- Réception, via le réseau de communication, d'une requête d'accès au service comprenant un jeton d'accès au service en provenance du terminal,
- Contrôle de la validité du jeton d'accès, et
- Autorisation d'accès lorsque le jeton est valide.

Un jeton d'accès généré par un serveur est diffusé, sur commande du serveur, par un ou plusieurs dispositifs de transmission par modulation de la lumière visible, comme par exemple des ampoules à LED conformes au standard Li-Fi. Le jeton d'accès peut par exemple être un cookie http, un code d'accès ou encore par exemple une clef de cryptage. Le jeton peut être diffusé à plusieurs terminaux ou émis vers un terminal particulier. Lorsqu'un terminal est à portée d'un tel dispositif de transmission, c'est-à-dire lorsque la lumière émise par le dispositif éclaire directement le terminal, celui-ci peut recevoir le jeton grâce à un capteur adapté. Le terminal peut alors émettre une requête d'accès au service incluant le jeton reçu. A la réception de la requête, le serveur vérifie la validité du jeton d'accès, en vérifiant par exemple que le jeton inclus dans la requête est bien un jeton qu'il a généré au préalable. De cette façon, seul un terminal ayant été éclairé directement par un dispositif de transmission par modulation de la lumière visible connecté au serveur peut accéder au service. Ainsi, un établissement peut octroyer un accès Internet à ses seuls clients sans qu'il soit nécessaire pour eux de saisir un quelconque code. D'autre part, la zone d'éclairage direct étant limitée et facilement configurable, il est possible de circonscrire précisément les zones à partir desquelles il est possible d'accéder au service. Ceci permet d'éviter que des individus qui ne sont pas clients puissent bénéficier de la connexion Internet offerte en se plaçant à l'extérieur, mais à proximité d'un établissement offrant un tel service, comme il est possible de le faire avec les points d'accès Wi-Fi actuels dont la portée dépasse souvent les limites de l'établissement.

Selon une réalisation particulière, le procédé est tel qu'il comporte en outre une étape de révocation du jeton d'accès après l'expiration d'une durée de validité associée au jeton.

La validité temporaire du jeton permet d'interdire une pratique qui viserait à mémoriser un jeton pour le réutiliser alors que le terminal est hors de portée du faisceau lumineux. Par exemple, une date de génération ou un nombre maximum d'utilisation peut être associée au jeton. De cette façon, seuls les terminaux présent de manière continue dans le faisceau lumineux peuvent accéder au service. Cette disposition permet d'éviter qu'un individu se présente dans un établissement dans le seul but d'obtenir un jeton lui permettant d'accéder ultérieurement au service depuis l'extérieur de l'établissement.

Selon un mode particulier de réalisation le procédé est tel que les étapes de génération d'un jeton et d'émission d'une commande de diffusion sont répétées périodiquement.

Le fait de générer et de diffuser périodiquement un jeton permet au procédé d'assurer qu'un terminal entrant dans la zone de couverture recevra rapidement un jeton d'accès. Par exemple, un serveur peut générer et diffuser un jeton toutes les 30 secondes afin qu'un utilisateur n'ait à patienter que quelques secondes avant de pouvoir accéder à un service dont l'accès est restreint par la localisation du terminal.

Selon un mode particulier de réalisation, le procédé est tel qu'il comporte au préalable les étapes suivantes :
- Réception, via le réseau de communication, d'une requête préalable d'accès au service en provenance du terminal,
- Obtention d'une donnée d'identification du terminal,

Le jeton étant généré en association avec la donnée d'identification du terminal et l'étape de contrôle de la validité du jeton comprenant en outre une vérification de la correspondance entre le jeton généré et la donnée d'identification du terminal.

Une première requête d'accès au service est reçue au préalable. Cette requête peut être une requête http classique ne comportant pas de jeton ou bien comportant un jeton invalide ou révoqué. À partir de cette requête, le serveur obtient une donnée d'identification du terminal et génère un jeton en association avec cette donnée. Par exemple, le serveur génère un jeton et mémorise dans une table la donnée d'identification du terminal pour lequel il a été généré. Sur commande du serveur, le jeton généré est émis par un dispositif de transmission de données par la lumière visible, de façon à ce que le jeton ne puisse être téléchargé que par un terminal localisé à portée de l'éclairage. Lorsque le jeton est téléchargé par le terminal, celui-ci réémet la requête d'accès au service en ajoutant le jeton d'accès téléchargé.

A la réception de la requête d'accès au service contenant le jeton, le serveur en contrôle la validité et vérifie en particulier la correspondance entre le jeton généré et l'identité du terminal émetteur de la requête.

Une telle disposition permet avantageusement de sécuriser l'accès au service en interdisant l'échange de jeton entre terminaux car un jeton est généré pour un terminal particulier. D'autre part, le terminal doit nécessairement être situé sous un faisceau lumineux lorsqu'il émet une requête afin d'obtenir le jeton correspondant. Cela permet également d'attribuer différent droits d'accès selon l'identité du terminal.

Corrélativement, l'invention concerne un procédé d'accès à un service sur un terminal adapté pour recevoir des données diffusées par un dispositif de transmission de données par modulation de lumière visible produisant un faisceau lumineux, le procédé étant caractérisé en ce qu'il comporte les étapes suivantes lorsque le terminal est à portée du faisceau lumineux:
- Réception d'un jeton d'accès au service via une interface de communication adaptée pour recevoir des données transmises par modulation de lumière visible,
- Émission, via un réseau de communication et à destination d'un serveur de contrôle d'accès, d'une requête d'accès comprenant le jeton d'accès reçu, et
- Accès au service lorsque le jeton est valide.

Le terminal est doté d'une interface adaptée pour recevoir des données émises par un dispositif de transmission de données par modulation de la lumière visible. Il peut s'agir par exemple d'une caméra ou d'un capteur photosensible compatible avec le standard Li-Fi. Par exemple, le produit Wysips^{®} Connect proposé par la société Sunpartner Technologies, permet de transformer n'importe quel écran en producteur d'électricité solaire et receveur de données via la lumière. Cette interface permet au terminal de recevoir un jeton d'authentification diffusé par un dispositif d'éclairage à LED par exemple et généré par un serveur suite à la réception d'une requête d'accès au service en provenance du terminal. Lorsqu'il émet une requête d'accès au service, le terminal y ajoute le jeton obtenu de façon à prouver au serveur qu'il est bien localisé à portée d'un faisceau lumineux ayant diffusé le jeton. Ainsi, le procédé permet d'une part de déterminer que le terminal souhaitant accéder à un service particulier est bien localisé à un emplacement à partir duquel l'accès est autorisé, et d'autre part d'éviter la saisie d'un code d'accès par l'utilisateur lorsqu'il souhaite accéder à un service en ligne à partir d'un hotspot.

Selon un autre aspect, l'invention concerne un dispositif de contrôle d'accès à un service en ligne, l'accès au service étant sollicité par un terminal adapté pour recevoir des données diffusées par un dispositif de transmission de données par modulation de lumière visible produisant un faisceau lumineux, le dispositif comprenant:
- Une unité de génération d'un jeton d'accès,
- Une interface de communication adaptée pour commander la diffusion du jeton d'accès dans le faisceau lumineux généré par le dispositif de transmission de données par modulation de lumière visible,
- Une interface de communication adaptée pour recevoir une requête d'accès au service comprenant un jeton d'accès en provenance du terminal,
- Une unité de contrôle pour contrôler la validité du jeton d'accès, et
- Une unité d'autorisation pour autoriser l'accès au service lorsque le jeton est valide.

Selon encore un autre aspect, l'invention concerne un dispositif d'accès à un service comprenant :
- Une unité de communication adaptée pour recevoir un jeton d'accès au service diffusé par un dispositif de transmission de données par modulation de lumière visible produisant un faisceau lumineux,
- Une unité de communication adaptée pour émettre, via un réseau de communication et à destination d'un serveur de contrôle d'accès, une requête d'accès comprenant le jeton d'accès reçu, et
- Une unité d'accès pour accéder au service.

L'invention se rapporte également à un serveur comprenant un dispositif de contrôle d'accès à un service.

L'invention se rapporte aussi à un terminal comprenant un dispositif d'accès à un service tel que décrit ci-dessus.

L'invention concerne également un programme d'ordinateur comportant les instructions pour l'exécution du procédé de contrôle d'accès et/ou les instructions pour l'exécution du procédé d'accès, lorsque le programme est exécuté par un processeur.

L'invention concerne aussi un support d'informations lisible par un processeur sur lequel est enregistré un programme d'ordinateur comprenant des instructions pour l'exécution des étapes du procédé de contrôle d'accès et/ou les instructions pour l'exécution du procédé d'accès. Le support d'information peut être un support d'information non transitoire tel qu'un disque dur, une mémoire flash, ou un disque optique par exemple.

Les différents modes ou caractéristiques de réalisation précités peuvent être ajoutés indépendamment ou en combinaison les uns avec les autres, aux étapes du procédé de contrôle d'accès et/ou aux étapes du procédé d'accès.

Les serveurs, terminaux, dispositifs, programmes et supports d'information présentent au moins des avantages analogues à ceux conférés par les procédés auxquels ils se rapportent.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La **figure 1** illustre de manière simplifiée une architecture permettant de mettre en oeuvre le procédé de contrôle d'accès et le procédé d'accès selon un mode particulier de réalisation de l'invention,
- La **figure 2** représente les principales étapes du procédé de contrôle d'accès selon une réalisation particulière,
- La **figure 3** illustre les étapes principales du procédé d'accès selon un mode particulier de réalisation,
- La **figure 4** est un chronogramme illustrant des messages échangés entre différents élément d'une architecture adaptée pour mettre en oeuvre l'invention selon une réalisation particulière.
- La **figure 5** représente de façon schématique un dispositif de contrôle d'accès selon un mode particulier de réalisation, et
- La **figure 6** représente une vue simplifiée d'un dispositif d'accès selon un mode particulier de réalisation.

### DESCRIPTION DÉTAILLÉE

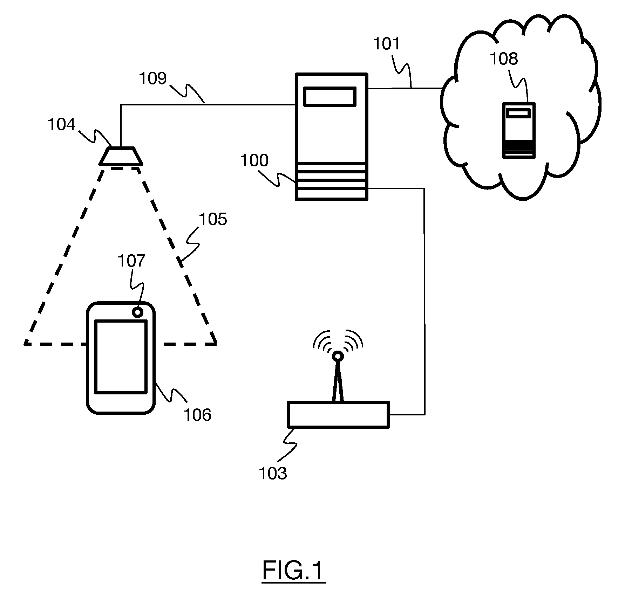

La **figure 1** illustre une architecture adaptée pour mettre en oeuvre l'invention selon un mode de réalisation particulier.

Cette architecture est installée par exemple dans un établissement accueillant du public, comme un restaurant, afin d'offrir un accès Internet gratuit aux clients.

L'architecture comprend un serveur 100 disposant d'un accès Internet 101 et d'un point d'accès sans fil 103, comme par exemple un point d'accès Wi-Fi. Le serveur 100 et le point d'accès Wi-Fi 103 peuvent aussi être combinés dans un même équipement comme dans un modem routeur ou une passerelle domestique. Le serveur comprend un module de communication adapté pour communiquer avec d'autres équipements au travers d'un réseau local. Le serveur peut également comprendre un module de communication, comme par exemple un modem ADSL ou fibre optique, adapté pour établir une communication avec un serveur 108 au travers d'un réseau de communication de type Internet. Le point d'accès 103 est par exemple un routeur Wi-Fi de type hotspot configuré de manière à ce que la saisie d'une clef de sécurité, comme par exemple une clef WEP ou WPA, ne soit pas nécessaire pour que les terminaux puisse s'y attacher et obtenir une adresse IP (Internet Protocol).

L'architecture comprend également un dispositif d'éclairage 104 adapté pour transmettre des données par modulation de la lumière visible, comme par exemple une ampoule à LED compatible avec le standard Li-Fi. Cet ampoule est connectée au serveur 100 en utilisant par exemple une technologie de transmission par courant porteur (CPL, Courant Porteur en Ligne), ou encore par Wi-Fi, Bluetooth, Ethernet ou tout autre type de connexion. Ainsi, le serveur 100 peut transmettre des données par l'intermédiaire du rayon lumineux 105 issu de l'ampoule 104.

La **figure 1** représente aussi un terminal 106 adapté pour accéder à un réseau par l'intermédiaire d'une connexion Wi-Fi. Lorsqu'il se connecte au réseau, le terminal obtient de manière classique une adresse IP et l'adresse d'une passerelle par défaut vers laquelle seront envoyées les données émises par le terminal. La passerelle par défaut est configurée de manière à ce que le serveur 100 puisse intercepter les messages émis par l'interface Wi-Fi du terminal 106. Le terminal 106 peut être un smartphone, une tablette, un ordinateur portable, une console de jeux, une montre connectée ou tout autre dispositif adapté pour accéder à Internet. Ce terminal est doté d'un processeur et d'une mémoire adaptés pour mettre en oeuvre le procédé d'accès selon l'invention. Le terminal 106 dispose en outre d'un capteur 107 adapté pour recevoir des données transmises par modulation de la lumière visible, et en particulier pour recevoir et décoder les données transmises par le dispositif de transmission d'éclairage 104, comme par exemple un jeton d'accès. Le capteur 107 peut être ou non intégré au terminal 106. Par exemple, le capteur peut être une cellule photovoltaïque spécialisée ou une caméra intégrée au terminal, mais il peut aussi s'agir d'un un périphérique externe tel qu'un périphérique USB (Universal Serial Bus) connecté à un ordinateur portable par exemple. Il peut également s'agir d'un écran ayant un capacité photovoltaïque. Le capteur 107 peut également être intégré à un accessoire porté, comme une montre un bracelet ou une broche, et transmettre les données reçues dans le flux lumineux 105 au terminal par l'intermédiaire d'une connexion Bluetooth par exemple.

Ainsi, cette architecture permet au terminal 106 d'échanger des données avec le serveur 100 par l'intermédiaire d'une connexion sans fil et de recevoir des données en provenance de ce serveur par l'intermédiaire d'un faisceau lumineux.

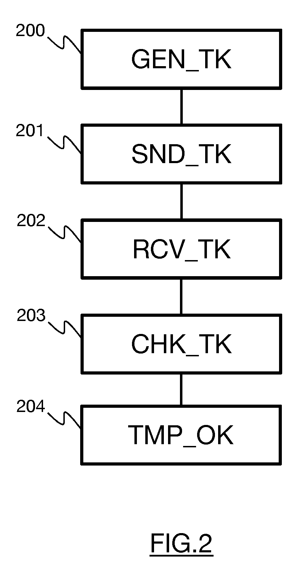

La **figure 2** illustre les principales étapes du procédé de contrôle d'accès.

Lors d'une première étape 200, le serveur génère un jeton d'accès à un service. Le jeton peut correspondre à une donnée d'authentification classique telle qu'un couple nom d'utilisateur/mot de passe, un cookie http, ou encore par exemple une clef de sécurité. Cette donnée d'authentification peut être constituée à partir de données préconfigurées dans une base de données ou un fichier de configuration à laquelle est appliquée une fonction de hachage de type MD5 par exemple. Selon une réalisation particulière, la donnée d'authentification est un nombre ou une chaine de caractère arbitraire générée aléatoirement et mémorisée dans une mémoire du serveur. Le jeton peut être mémorisé dans une table du serveur en association avec la date et l'heure de la génération et/ou un identifiant d'un terminal pour lequel il a été généré. Selon une réalisation particulière, des droits d'accès à au moins un service sont associés au jeton d'accès. Selon un mode de réalisation particulier, un nouveau jeton d'accès est généré périodiquement afin qu'un terminal ne puisse pas mémoriser et utiliser ultérieurement un jeton alors qu'il n'est plus à portée du faisceau lumineux.

À l'étape 201, le serveur commande la diffusion du jeton d'accès au service par au moins un dispositif de transmission de données par modulation de la lumière visible. Un tel dispositif correspond par exemple à une ampoule à LED adaptée pour moduler la lumière émise à haute fréquence selon un protocole de transmission de données particulier, comme par exemple une ampoule compatible avec le standard Li-Fi. Une telle ampoule comprend généralement une interface réseau de type Wi-Fi, Bluetooth ou CPL permettant à un équipement de transmettre des données au travers de l'ampoule. Par exemple, le serveur 100 de la figure 1 peut communiquer avec l'ampoule 104 par l'intermédiaire du réseau CPL 109 et en particulier émettre une commande de transfert de données dans le faisceau lumineux 105 généré par l'ampoule 104. Ainsi, le serveur 100 commande la diffusion du jeton d'accès au service par le dispositif 104 de transmission de données par modulation de lumière visible. Le jeton d'accès ainsi transféré peut être reçu par le terminal 106 par l'intermédiaire du capteur photosensible 107 lorsqu'il est à portée du faisceau lumineux 105. Selon un mode de réalisation particulier, le jeton d'accès est diffusé périodiquement afin qu'un terminal puisse rapidement recevoir un jeton lorsqu'il entre dans la portée d'un faisceau lumineux tel que le faisceau 105.

Lors de l'étape 202, le serveur 100 reçoit une requête d'accès au service émise par un terminal et comprenant un jeton d'accès au service. Cette requête est reçue via une interface réseau, comme par exemple une interface réseau sans fil de type Wi-Fi telle que le point d'accès 103. Ainsi, le serveur reçoit par exemple lors de cette étape une requête http de type GET émise par le terminal 106 pour accéder à une page Web. Outre le contenu classique d'une requête http, la requête comprend une donnée d'authentification générée à partir d'un jeton d'accès au service transmit au préalable par l'intermédiaire du faisceau lumineux à l'étape 201. Par exemple, la donnée d'authentification peut être construite à partir d'un nom d'utilisateur et d'un mot de passe ou une autre donnée secrète comprise dans le jeton à laquelle le terminal applique une fonction de hachage, ou bien à partir du jeton lui-même.

Le serveur contrôle la validité du jeton d'accès à l'étape 203 en vérifiant que le jeton présent dans la requête reçue à l'étape 202 correspond à un jeton généré à l'étape 200, en appliquant par exemple la fonction de hachage utilisée par le terminal aux données transmises dans le jeton pour vérifier la concordance du résultat avec la donnée envoyée par le terminal. Selon une réalisation particulière, le contrôle de validité comprend également une vérification du statut de révocation du jeton et/ou une vérification que le délai entre la date de génération du jeton et la date de la vérification n'excède pas une durée prédéterminée. Par exemple, un jeton peut être considéré invalide lorsque le délai entre sa génération et le contrôle de sa validité est supérieur à 5 minutes. Lorsque le délai de validité du jeton est expiré, le jeton peut être révoqué de façon à ce qu'il ne puisse plus être utilisé.

Lorsque le jeton est valide, le serveur 100 autorise l'accès au service pour le terminal ayant émis la requête. Pour cela, le serveur retire le jeton de la requête et la transmet vers le réseau destinataire 108 par l'intermédiaire de l'accès Internet 101.

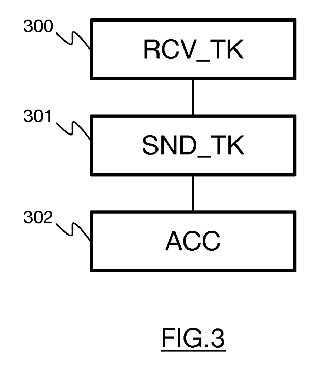

La figure 3 illustre les principales étapes du procédé d'accès à un service à partir d'un terminal. Le terminal 106 de la figure 1 est équipée d'un capteur photosensible adapté pour recevoir des données diffusées par un dispositif de transmission de données par modulation de lumière visible produisant un faisceau lumineux.

Lorsqu'il est à portée du faisceau lumineux, le terminal reçoit à l'étape 300 un jeton d'accès au service généré par le serveur 100 et diffusé par le dispositif 104. La transmission est réalisée selon un protocole de communication par la lumière visible (VLC, pour Visible Light Communication en anglais) tel que le standard Li-Fi par exemple.

À l'étape 301, le terminal émet, par l'intermédiaire d'une interface réseau telle que par exemple une interface Wi-Fi, une requête d'accès à un service comprenant le jeton d'accès reçu à l'étape 300. Par exemple, le terminal 106 émet une requête http GET à laquelle est ajouté le jeton lorsqu'il tente d'accéder à une page web disponible sur Internet. La requête est dirigée vers la passerelle par défaut configurée lors de l'attachement du terminal au réseau Wi-Fi, c'est-à-dire par exemple vers le serveur 100.

Le terminal peut accéder au service en ligne à l'étape 302 lorsque le jeton est valide.

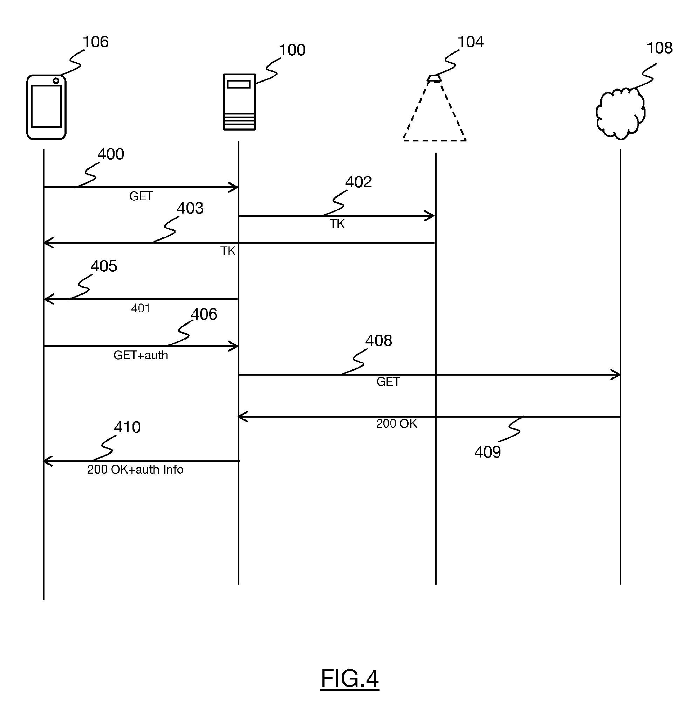

La **figure 4** est un chronogramme illustrant des messages échangés entre différents éléments de l'architecture représentée sur la figure 1 adapté pour mettre en oeuvre l'invention selon une réalisation particulière. Cet exemple de réalisation utilisant le protocole http pour l'accès à un service web est donné à titre purement illustratif, l'invention pouvant être mise en oeuvre à l'aide d'autres protocoles de transmissions adaptés. Par exemple, le protocole SIP peut être utilisé pour mettre en oeuvre l'invention pour l'accès à un service de communication vocale ou de messagerie instantanée.

Le terminal 106 émet une première requête http 400 de type GET afin de télécharger par exemple une page à partir d'un serveur Internet. La requête est interceptée par le serveur 100 car une passerelle par défaut correspondant au serveur 100 a été configurée sur le terminal lors de son attachement au réseau selon une technique classique d'attribution d'adresse. À la réception de la requête 400, le serveur 100 génère un jeton d'accès au service selon l'étape 200 décrite précédemment. Par exemple, cette étape de génération est réalisée par la lecture d'un nom d'utilisateur et d'un mot de passe dans un fichier de configuration du serveur. Le jeton est transmis au dispositif 104 de transmission par la lumière visible par un message de commande 402. Ce message transite par exemple via le réseau électrique selon une technologie CPL (Courant Porteur de Ligne) pour atteindre le dispositif 104. Le dispositif 104 de diffuse le jeton dans un message 403 par modulation de la lumière selon un protocole de transmission dans la lumière visible en se conformant par exemple au standard Li-FI. Le jeton peut être diffusé à tous les terminaux localisés à portée du faisceau lumineux selon une technique de broadcast ou bien transmis à un terminal en particulier selon une technique d'adressage unicast classique. En réponse à la requête 400 interceptée, le serveur émet une réponse 405 de type « 401 Unauthorized » ou « 407 proxy authentication required » selon le protocole http. Ce type de réponse est bien connue du protocole http lors de l'accès à une ressource protégée et invite un terminal à montrer qu'il connait un nom d'utilisateur et un mot de passe l'autorisant à accéder à une ressource particulière. Une telle réponse comprend une demande d'identification sous la forme d'une entête « WWW-Authenticate ». Le terminal doit alors répondre à cette demande d'identification selon une méthode définie par le protocole http, tel que par exemple la méthode « Digest » bien connue de l'homme du métier qui consiste à appliquer une fonction de hachage de type MD5 ou SHA à certaines données présentes dans l'invitation du serveur auxquelles le terminal ajoute une donnée secrète, comme par exemple un nom d'utilisateur et un mot de passe. Selon un mode particulier de réalisation de l'invention, la donnée secrète utilisée pour répondre à l'invitation du serveur est comprise dans le jeton transmis par modulation de la lumière visible et reçu par le terminal. Ainsi, seul un terminal présent dans le faisceau lumineux dans lequel est transmis le jeton peut répondre à la demande d'identification. Le terminal peut alors émettre une nouvelle requête d'accès au service 406 à laquelle il ajoute une entête « Autorisation » construite à l'aide du jeton d'accès reçu dans le message 403. Lorsque l'identification est valide, c'est-à-dire lorsque la donnée d'authentification est validée selon l'étape 203, le serveur réémet la requête 408 vers le réseau destinataire et relaye la réponse « 200 OK » 409 du service distant vers le terminal au moyen du message 410. Le message 410 peut en outre comprendre une entête http « Authentication-Info » contenant des informations sur l'identification réussie et la prochaine authentification.

Selon une réalisation particulière, le jeton généré par le serveur est associé à une donnée d'identification du terminal obtenue à la réception d'une première requête d'accès au service émise par le terminal. La donnée d'identification du terminal peut être obtenue de différente manière. Par exemple, le terminal peut transmettre cette information dans un champ adapté de la requête. Selon un autre mode de réalisation, le serveur peut obtenir un identifiant du terminal en utilisant le protocole ARP (Address Resolution Protocol) qui permet d'obtenir l'adresse MAC (Media Access Control) d'un terminal à partir de son adresse IP. Une adresse MAC étant unique, elle peut servir d'identifiant du terminal. Le jeton étant généré en association avec la donnée d'identification du terminal, et l'étape de contrôle de la validité du jeton comprenant en outre une vérification de la correspondance entre le jeton généré et la donnée d'identification du terminal, le procédé peut garantir qu'un jeton ne peut être utilisé que par un terminal particulier.

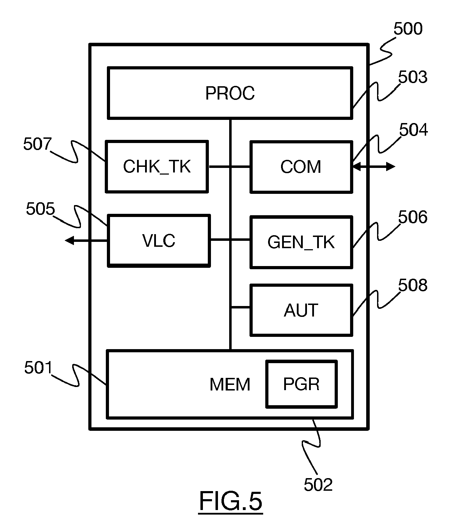

La **figure 5** illustre un dispositif 500 mettant en oeuvre le procédé de contrôle d'accès à un service, selon un mode particulier de réalisation de l'invention. Le dispositif comprend un espace de stockage 501, par exemple une mémoire MEM, une unité de traitement 503 équipée par exemple d'un processeur PROC. L'unité de traitement peut être pilotée par un programme 502, par exemple un programme d'ordinateur PGR, mettant en oeuvre le procédé de contrôle d'accès à un service tel que décrit dans l'invention en référence à la figure 2, et notamment les étapes de génération d'un jeton d'accès au service, d'émission d'une commande de diffusion du jeton d'accès au service par le dispositif de transmission de données par modulation de lumière visible, et lorsque le terminal est à portée du faisceau lumineux, de réception, via le réseau de communication, d'une requête d'accès au service comprenant un jeton d'accès au service en provenance du terminal, de contrôle de la validité du jeton d'accès, et d'autorisation d'accès au service lorsque le jeton est valide.

À l'initialisation, les instructions du programme d'ordinateur 502 sont par exemple chargées dans une mémoire RAM (Random Access Memory en anglais) avant d'être exécutées par le processeur de l'unité de traitement 503. Le processeur de l'unité de traitement 503 met en oeuvre les étapes du procédé de contrôle d'accès à un service selon les instructions du programme d'ordinateur 502.

Pour cela, le dispositif comprend, outre la mémoire 501, une unité de communication 504 (COM) permettant au dispositif de se connecter à un réseau de télécommunication et d'échanger des données avec d'autres dispositifs par l'intermédiaire du réseau de télécommunications, et en particulier d'émettre des réponses aux requêtes émises par un terminal et relayer des requêtes émises par un terminal lorsque la validité d'une donnée d'identification telle qu'un jeton d'accès est vérifiée. Cette unité de communication peut être une interface réseau de type Ethernet, CPL, Wi-Fi, ou encore une unité d'accès Internet telle que par exemple une interface ADSL ou fibre optique. Selon une réalisation particulière, le dispositif comprend en outre un dispositif 505 de transmission de données par modulation de la lumière visible. Ce dispositif de transmission peut correspondre par exemple à un dispositif d'éclairage à LED adapté pour transmettre des données dans le faisceau lumineux selon le standard LI-FI. Selon une réalisation particulière, le serveur comprend un interface de communication permettant de commander un tel dispositif de transmission par modulation de la lumière visible. Une telle interface est adaptée pour transmettre des instructions et des données au dispositif comme par exemple une commande de transmission d'un jeton d'accès au service vers un ou plusieurs terminaux à portée du faisceau lumineux. Cette interface peut être une interface de communication de type Wi-Fi, Bluetooth, USB ou encore par exemple CPL. Le dispositif comprend également selon une réalisation particulière, une unité de génération d'un jeton d'accès 506 comme par exemple une unité GEN_TK de génération aléatoire d'un nom d'utilisateur et d'un mot de passe. Le dispositif comprend en outre une unité de contrôle de la validité d'un jeton d'accès 507 comme par exemple un comparateur CHK_TK, adaptée pour vérifier la validité d'un jeton selon l'étape 203 du procédé. Le dispositif comprend en outre une unité d'autorisation d'accès 508 AUT adaptée pour relayer une requête d'accès émise par le terminal vers le service destinataire lorsque le jeton est valide.

Selon une réalisation particulière de l'invention, le dispositif de contrôle d'accès est intégré dans un serveur, une passerelle domestique ou un routeur Wi-Fi.

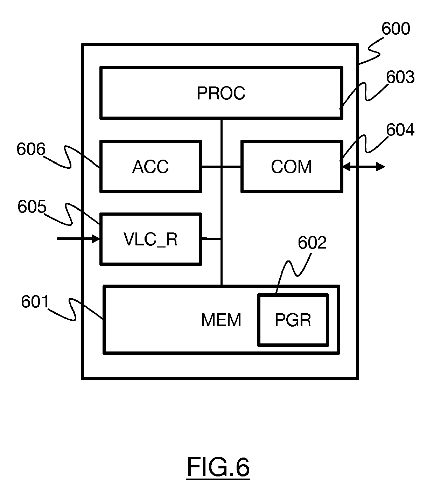

La **figure 6** illustre un dispositif 600 mettant en oeuvre le procédé d'accès à un service, selon un mode particulier de réalisation de l'invention. Le dispositif comprend un espace de stockage 601, par exemple une mémoire MEM, une unité de traitement 603 équipée par exemple d'un processeur PROC. L'unité de traitement peut être pilotée par un programme 602, par exemple un programme d'ordinateur PGR, mettant en oeuvre le procédé d'accès à un service tel que décrit dans l'invention en référence à la figure 3, et notamment les étapes de réception d'un jeton d'accès au service via une interface de communication adaptée pour recevoir des données transmises par modulation de lumière visible, d'émission, via un réseau de communication et à destination du serveur de contrôle d'accès, d'une requête d'accès comprenant le jeton d'accès reçu et d'accès au service lorsque le jeton est valide.

À l'initialisation, les instructions du programme d'ordinateur 602 sont par exemple chargées dans une mémoire RAM (Random Access Memory en anglais) avant d'être exécutées par le processeur de l'unité de traitement 603. Le processeur de l'unité de traitement 603 met en oeuvre les étapes du procédé d'accès à un service selon les instructions du programme d'ordinateur 602.

Pour cela, le dispositif comprend, outre la mémoire 601, une unité de communication 604 (COM) adaptée pour émettre, via un réseau de communication et à destination du serveur de contrôle d'accès, une requête d'accès comprenant un jeton d'accès. Cette unité de communication peut être une carte réseau Ethernet, une interface Wi-Fi ou encore par exemple Bluetooth. Selon une réalisation particulière, le dispositif comprend en outre une unité de communication adaptée pour recevoir un jeton d'accès au service diffusé par un dispositif de transmission de données par modulation de lumière visible produisant un faisceau lumineux, comme par exemple un capteur 605 (VLC_R) adapté pour recevoir des données transmises par modulation de la lumière visible. Ce capteur peut être par exemple une cellule photovoltaïque adaptée ou une caméra et être intégré au terminal ou relié au terminal par l'intermédiaire d'une interface de communication. Selon une réalisation particulière, le capteur peut être intégré dans un écran tactile du terminal. Le dispositif comprend également une unité 606 d'accès au service (ACC) adaptée pour s'identifier auprès du serveur à l'aide du jeton d'accès reçu.

Selon une réalisation particulière de l'invention, le dispositif d'accès est intégré dans un terminal mobile de type smartphone, un ordinateur portable, un objet connecté ou un périphérique de type clef USB.

L'invention concerne également un système de contrôle d'accès à un service comprenant un dispositif de contrôle d'accès à un service, un dispositif d'accès à un service et un dispositif de transmission de données par la lumière visible. La figure 1 représente un exemple d'un tel système dans lequel un dispositif de contrôle d'accès est intégré dans le serveur 100, un dispositif d'accès est intégré dans le terminal 106 et le dispositif de transmission par modulation de la lumière visible correspond à la lampe 104.

## Revendications

1. Procédé de contrôle d'accès à un service en ligne, l'accès au service étant sollicité, via un réseau de communication, par un terminal adapté pour recevoir des données diffusées par un dispositif de transmission de données par modulation de lumière visible produisant un faisceau lumineux, le procédé étant **caractérisé en ce qu'**il comporte les étapes suivantes mises en oeuvre par un serveur:
- Génération (200) d'un jeton d'accès au service,
- Émission (201) d'une commande de diffusion du jeton d'accès au service par le dispositif de transmission de données par modulation de lumière visible, et
Lorsque le terminal est à portée du faisceau lumineux :
- Réception (202), via le réseau de communication, d'une requête d'accès au service comprenant un jeton d'accès au service en provenance du terminal,
- Contrôle (203) de la validité du jeton d'accès, et
- Autorisation (204) d'accès lorsque le jeton est valide.

2. Procédé selon la revendication 1 **caractérisé en ce qu'**il comporte en outre une étape de révocation du jeton d'accès après l'expiration d'une durée de validité associée au jeton.

3. Procédé selon l'une quelconque des revendications précédentes **caractérisé en ce que** les étapes de génération d'un jeton et d'émission d'une commande de diffusion sont répétées périodiquement.

4. Procédé selon l'une quelconque des revendications précédentes **caractérisé en ce qu'**il comporte au préalable les étapes suivantes :
- Réception, via le réseau de communication, d'une requête préalable d'accès au service en provenance du terminal,
- Obtention d'une donnée d'identification du terminal,
Le jeton étant généré en association avec la donnée d'identification du terminal et l'étape de contrôle de la validité du jeton comprenant en outre une vérification de la correspondance entre le jeton généré et la donnée d'identification du terminal.

5. Procédé d'accès à un service sur un terminal adapté pour recevoir des données diffusées par un dispositif de transmission de données par modulation de lumière visible produisant un faisceau lumineux, le procédé étant **caractérisé en ce qu'**il comporte les étapes suivantes lorsque le terminal est à portée du faisceau lumineux:
- Réception d'un jeton d'accès au service via une interface de communication adaptée pour recevoir des données transmises par modulation de lumière visible,
- Émission, via un réseau de communication et à destination d'un serveur de contrôle d'accès, d'une requête d'accès comprenant le jeton d'accès reçu, et
- Accès au service lorsque le jeton est valide.

6. Dispositif de contrôle d'accès à un service en ligne, l'accès au service étant sollicité par un terminal adapté pour recevoir des données diffusées par un dispositif de transmission de données par modulation de lumière visible produisant un faisceau lumineux, le dispositif comprenant:
- Une unité de génération d'un jeton d'accès,
- Une interface de communication adaptée pour commander la diffusion du jeton d'accès dans le faisceau lumineux généré par le dispositif de transmission de données par modulation de lumière visible,
- Une interface de communication adaptée pour recevoir une requête d'accès au service comprenant un jeton d'accès en provenance du terminal,
- Une unité de contrôle pour contrôler la validité du jeton d'accès, et
- Une unité d'autorisation pour autoriser l'accès au service lorsque le jeton est valide.

7. Dispositif d'accès à un service comprenant :
- Une unité de communication adaptée pour recevoir un jeton d'accès au service diffusé par un dispositif de transmission de données par modulation de lumière visible produisant un faisceau lumineux,
- Une unité de communication adaptée pour émettre, via un réseau de communication et à destination d'un serveur de contrôle d'accès, une requête d'accès comprenant le jeton d'accès reçu, et
- Une unité d'accès pour accéder au service.

8. Système de contrôle d'accès à un service **caractérisé en ce qu'**il comporte :
- Un dispositif de contrôle d'accès selon la revendication 6,
- Un dispositif d'accès au service selon la revendication 7,
- Un dispositif de transmission de données par modulation de lumière visible produisant un faisceau lumineux.

9. Serveur **caractérisé en ce qu'**il comporte un dispositif de contrôle d'accès selon la revendication 6.

10. Terminal **caractérisé en ce qu'**il comporte un dispositif d'accès selon la revendication 7.

11. Programme d'ordinateur comportant les instructions pour l'exécution du procédé de contrôle d'accès selon l'une quelconque des revendications 1 à 4 et/ou les instructions pour l'exécution du procédé d'accès selon la revendication 5, lorsque le programme est exécuté par un processeur.

12. Support d'informations lisible par un processeur sur lequel est enregistré un programme d'ordinateur comprenant des instructions pour l'exécution des étapes du procédé de contrôle d'accès selon l'une quelconque des revendications 1 à 4 et/ou les instructions pour l'exécution du procédé d'accès selon la revendication 5.
